# EUROPEAN PATENT APPLICATION

(11) **EP 4 345 669 A1**
(43) Date of publication of application: **03.04.2024**
(21) Application number: 22815204.7
(22) Date of filing: 30.05.2022
(51) Int. Cl.: G06F 21/60, G06F 21/62

(54) **USER PRIVACY PROTECTION METHOD AND APPARATUS**

(30) Priority: 04.06.2021 CN 202110627606; 11.03.2022 CN 202210243479
(71) Applicant: Huawei Technologies Co., Ltd., Shenzhen, Guangdong 518129 (CN)
(72) Inventor: SUN, Liang, Shenzhen, Guangdong 518129 (CN); ZHANG, Shu, Shenzhen, Guangdong 518129 (CN)
(74) Representative: Huawei European IPR
(86) International application number: PCT/CN2022/095856
(87) International publication number: WO 2022/253158

(57) **Abstract**

This application discloses a user privacy protection method and an apparatus. The method includes: An SDK of an application in an electronic device can communicate with a system service only by using a binder communication mechanism. Therefore, the electronic device can intercept (HOOK) a binder interface invocation for obtaining target data. After having an intercept capability, the electronic device can control, by using a solution of positioning the SDK by using a call stack, behavior of the SDK for obtaining the target data.

## Description

This application claims priorities to Chinese Patent Application No. 202110627606.8, filed with the China National Intellectual Property Administration on June 4, 2021 and entitled "USER PRIVACY PROTECTION METHOD AND APPARATUS", and to Chinese Patent Application No. 202210243479.6, filed with the China National Intellectual Property Administration on March 11, 2022 and entitled "USER PRIVACY PROTECTION METHOD AND APPARATUS", both of which are incorporated herein by reference in their entireties.

### TECHNICAL FIELD

This application relates to the field of computer technologies, and in particular, to a user privacy protection method and an apparatus.

### BACKGROUND

Currently, there are more functions of an application. Usually, developers cannot completely develop all functions by themselves, but implement some functions of a product by integrating many SDKs (Software Development Kit, software development kit). An officially launched application usually integrates about 20 SDKs.

When SDKs are widely used, security issues related to the SDKs are increasingly concerned. Insecure network communication may cause user privacy disclosure. For example, the developers usually cannot know all functions of the integrated SDKs. Currently, it is found that, in addition to providing functions declared by many SDKs, the many SDKs also secretly collect user privacy data on a mobile phone. The most common is, for example, a device number of the mobile phone, a list of all programs installed on the mobile phone, and even a case in which sound recording is secretly performed in a background.

Therefore, how to prevent an SDK in an application from stealing user privacy data is an urgent problem to be resolved.

### SUMMARY

This application provides a user privacy protection method and an apparatus, so that an electronic device can intercept (HOOK) a binder interface invocation for obtaining target data. After having an intercept capability, the electronic device can control, by using a solution of positioning an SDK by using a call stack, behavior of the SDK for obtaining the target data.

According to a first aspect, this application provides a user privacy protection method. The method includes: A first application of an electronic device obtains a first binder instruction for invoking first target data by a first software development kit SDK; the first application of the electronic device obtains an identifier of the first SDK; and when the first application of the electronic device determines, based on the identifier of the first SDK, that the first SDK has permission to obtain the first target data, the first application of the electronic device calls a system service to return the first target data to the first SDK.

According to the method provided in the first aspect, the electronic device can intercept (HOOK) a binder interface invocation for obtaining the target data. After having an intercept capability, the electronic device can control, by using a solution of positioning the SDK by using a call stack, behavior of the SDK for obtaining the target data. In addition, the application in the electronic device 100 has an interception capability, and a developer only needs to modify a function of the application, so that the application controls the behavior of the SDK for obtaining the target data. In this way, there is no need to improve the electronic device, and only the application needs to be improved. Therefore, modifications are small, and a range of application is wide.

With reference to the first aspect, in a possible implementation, the method further includes: When the first application of the electronic device determines, based on the identifier of the first SDK, that the first SDK has no permission to obtain the first target data, the electronic device does not return any data to the first SDK.

With reference to the first aspect, in a possible implementation, the method further includes: When the first application of the electronic device determines, based on the identifier of the first SDK, that the first SDK has no permission to obtain the first target data, the first application of the electronic device calls the system service to return second target data to the first SDK, where the second target data is different from the first target data. That is, when the first application of the electronic device determines, based on the identifier of the first SDK, that the first SDK permission obtains the first target data, the first application of the electronic device may not return any data to the first SDK, or may return false target data (for example, the second target data) to the first SDK. In this way, a disclosure risk of user data stored in an electronic device 100 can be prevented.

With reference to the first aspect, in a possible implementation, the first SDK is integrated in the first application of the electronic device; before a first application of an electronic device obtains a first binder instruction for invoking first target data by a first software development kit SDK, the method further includes: integrating a binder system invocation intercept module in the first application of the electronic device; and that a first application of an electronic device obtains a first binder instruction for invoking first target data by a first software development kit SDK includes: the first application of the electronic device obtains, by using the binder system invocation intercept module, the first binder instruction for invoking the first target data by the first SDK. That is, the binder system invocation intercept module is integrated in the first application, and the binder system invocation intercept module may intercept the first binder instruction used to obtain the target data. The SDK invoking the first binder instruction is analyzed, to prevent a disclosure risk of user data stored in the electronic device 100.

With reference to the first aspect, in a possible implementation, before a first application of an electronic device obtains a first binder instruction for invoking first target data by a first software development kit SDK, the method further includes: integrating a calling package name matching module in the first application of the electronic device; and that the first application of the electronic device obtains an identifier of the first SDK includes: the first application of the electronic device obtains the identifier of the first SDK by using the calling package name matching module.

With reference to the first aspect, in a possible implementation, that the first application of the electronic device obtains an identifier of the first SDK includes: the first application of the electronic device determines call stack information for invoking the first binder instruction, where the call stack information includes function information of a plurality of call sites; the first application of the electronic device removes, from the call stack information, function information of a call site associated with a system function; the first application of the electronic device determines, based on remaining function information of a call site in the call stack information, a first code block for invoking the first binder instruction; and when the first code block belongs to a second code block in the first SDK, the first application of the electronic device determines that the first SDK invokes the first binder instruction, and obtains the identifier of the first SDK. The first application of the electronic device may determine, by using a stack traceback method, that the first SDK invokes the first binder instruction.

With reference to the first aspect, in a possible implementation, before a first application of an electronic device obtains a first binder instruction for invoking first target data by a first software development kit SDK, the method further includes: integrating a policy configuration module in the first application of the electronic device; the first application of the electronic device sets permission of the first SDK by using the policy configuration module; and the first application of the electronic device sends, by using the policy module, the identifier of the first SDK and permission information corresponding to the identifier of the first SDK to the calling package name matching module. That is, the developer may set, in the policy configuration module, the permission of the SDK integrated in the first application based on a requirement of the SDK integrated in the first application, to specify which SDKs are allowed to obtain the target data, and which SDKs are not allowed to obtain the target data.

In another possible implementation, the developer may periodically update the permission of the SDK integrated in the first application. For example, the permission of the first SDK is to allow to obtain user privacy data, and the developer may periodically modify the permission of the first SDK not to allow to obtain the user privacy data.

With reference to the first aspect, in a possible implementation, that the first application of the electronic device determines that the first SDK has permission to obtain the first target data includes: the first application of the electronic device determines, based on the identifier of the first SDK and the permission information corresponding to the identifier of the first SDK, that the first SDK has the permission to obtain the first target data.

With reference to the first aspect, in a possible implementation, the target data includes: one or more of an international mobile equipment identifier IMEI number of the electronic device, an identifier of an application installed in the electronic device, and user personal data stored in the electronic device. The target data may further include other more data. This is not limited in this embodiment of this application.

According to a second aspect, this application provides an electronic device, and the electronic device includes one or more processors and one or more memories. The one or more memories are coupled to the one or more processors, the one or more memories are configured to store computer program code, and the computer program code includes computer instructions. The one or more processors invoke the computer instructions, so that the electronic device is enabled to perform the user privacy data protection method according to any one of the possible implementations of the first aspect.

According to a third aspect, an embodiment of this application provides a computer storage medium, including computer instructions. When the computer instructions are run on an electronic device, the electronic device is enabled to perform the user privacy data protection method according to any one of the possible implementations of the first aspect.

According to a fourth aspect, an embodiment of this application provides a computer program product. When the computer program product runs on a computer, the computer is enabled to perform the user privacy data protection method according to any one of the possible implementations of the first aspect.

According to a fifth aspect, an embodiment of this application provides one or more functional units, and the one or more functional units are configured to perform the user privacy data protection method according to any one of the possible implementations of the first aspect.

### BRIEF DESCRIPTION OF DRAWINGS

FIG. 1 is a schematic diagram of obtaining user privacy data by an SDK integrated in an application according to an embodiment of this application;
FIG. 2 is a schematic diagram of obtaining user privacy data by an SDK integrated in an application, causing user privacy data disclosure according to an embodiment of this application;
FIG. 2A to FIG. 2C are UI diagrams of an example in which HUAWEI Video asks a user whether to allow to obtain user privacy data;
FIG. 3 is a schematic diagram restricting, by an electronic device by using an isolated process, an SDK to obtain user privacy data according to an embodiment of this application;
FIG. 4 is a schematic diagram of a structure of an electronic device 100 according to an embodiment of this application;
FIG. 5 is a block diagram of a software structure of an electronic device 100 according to an embodiment of this application;
FIG. 6 is a diagram of a system architecture according to an embodiment of this application;
FIG. 6A is a schematic diagram of an SDK 1, an SDK 2, and an SDK 3 according to an embodiment of this application;
FIG. 7 is a flowchart of a method for calling, by a calling package name matching module, a traceback call stack based on a binder instruction for obtaining user privacy, and finding a package name of an SDK of the binder instruction used to obtain the user privacy according to an embodiment of this application;
FIG. 7A is a schematic diagram of call stack information according to an embodiment of this application;
FIG. 8 is a schematic flowchart of a user privacy protection method according to an embodiment of this application; and
FIG. 9A to FIG. 9J are a group of schematic diagrams of modifying permission of an SDK in a music application by an electronic device 100 based on user operations according to an embodiment of this application.

### DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in this specification, claims, and accompanying drawings of this application is a medium interface for interaction and information exchange between a user and an application or an operating system, and implements conversion between an internal form of information and a form acceptable to the user. A user interface of an application is source code written in a specific computer language, for example, java or an extensible markup language (extensible markup language, XML). The source code of the interface is parsed and rendered on a terminal device, and is finally presented as user-identifiable content, for example, a control, for example, a picture, a text, or a button. The control (control), also referred to as a widget (widget), is a basic element on the user interface. Typical controls include a toolbar (toolbar), a menu bar (menu bar), an input box, a button (button), a scrollbar (scrollbar), a picture, and a text. An attribute and content of the control on the interface are defined by using a tag or a node. For example, the control included on the interface is defined in the XML by using a node, for example, <Textview>, <ImgView>, or <VideoView>. One node corresponds to one control or one attribute on the interface. After being parsed and rendered, the node is presented as user-visible content. In addition, interfaces of many applications such as a hybrid application (hybrid application) usually further include a web page. A web page, also referred to as a page, may be understood as a special control embedded in an interface of an application. A web page is source code written in a specific computer language, for example, a hypertext markup language (hypertext markup language, HTML), cascading style sheets (cascading style sheets, CSS), or javascript (JavaScript, JS). The web page source code may be loaded and displayed as user-identifiable content by a browser or a web page display component with a function similar to a function of the browser. Specific content included in the web page is also defined by using a tag or a node in the web page source code. For example, an element and an attribute of the web page are defined in the HTML by using <p>, <img> <video>, or <canvas>.

The user interface is usually represented in a form of a graphical user interface (graphical user interface, GUI), and is a user interface that is related to a computer operation and that is displayed in a graphic manner. The graphical user interface may be an interface element such as a window or a control displayed on a display of an electronic device.

In the following, some terms in embodiments of this application are described, to help persons skilled in the art have a better understanding.
(1) SDK (software development kit, software development kit): is a collection of related documents, examples, and tools to assist in development of an APP (Application, application). On an Android platform, to improve development efficiency and reduce costs, an APP developer may deliver a function to a third party for development. A third-party service provider encapsulates a service into a toolkit (namely, an SDK) for use by the APP developer. Currently, common SDK types include a third-party login sharing type, a payment type, a push type, an advertisement type, and a data statistics analysis type.
(2) Call stack traceback: performs hook on a function that generates a sensitive behavior for an Android application; when these key functions are called, obtains and records call stack information of the key functions in a java virtual machine; and then finds call sites of these key functions by tracing back the call stack information.
(3) API (Application Programming Interface, application programming interface): is some predefined functions. In addition to coordinating execution of an application, memory allocation, and system resource management, an operating system is also a large service center, and calls various services (each service is a function) of the service center, to help the application achieve a purpose of opening windows, drawing graphics, and using a peripheral device. The application programming interface is "code provided by the 'operating system (Operating system)' or a 'program library' for the application to invoke". A main purpose of the application programming interface is to allow an application developer to invoke a group of routine functions without having to think about underlying source code of the routine functions or to understand details of an internal working mechanism of the routine functions. The API itself is abstract, defines only an interface, and does not include a specific operation of an application in an actual implementation process.
(4) Hook: also known as a hook function, is a platform of a message processing mechanism of an operating system. An application may set a subroutine on the hook to monitor a message of a specified window, and a monitored window may be created by another process. When arriving, the message is processed before a processing function of a target window. A hook mechanism allows the application to intercept and process a message or a specific event of the operating system. The hook can monitor various event messages in the system or a process, intercept and process a message sent to the target window. The hook is actually a program segment for processing a message. The program segment is hooked to the system through system invocation. Each time a specific message is sent, the hook program first captures the message before the specific message reaches a destination window, that is, the hook function first obtains control. A hook has a pointer list associated with the hook, referred to as a hook list, which is maintained by the system. A pointer of this list points to a specified callback function that is defined by the application and that is called by a hook subroutine, namely, each processing subroutine of the hook. When a message associated with a specified hook type occurs, the system transfers the message to the hook subroutine. Some hook subroutines can only monitor messages, modify messages, or stop progresses of messages, to prevent these messages from being transferred to next hook subroutines or destination windows.
(5) Binder communication mechanism: The binder communication mechanism is an inter-process communication mechanism in a Linux/Android system. The binder communication mechanism is a mechanism for communication between an SDK in an application and a system service (system services). That is, the SDK in the application cannot directly obtain user privacy data. The SDK needs to send a request for obtaining the privacy data to the system service by using the binder communication mechanism. After the system service receives and responds to the request for obtaining the privacy data sent by the binder communication mechanism, the system service sends the user privacy data to the SDK by using the binder communication mechanism, and the SDK receives the user privacy data.

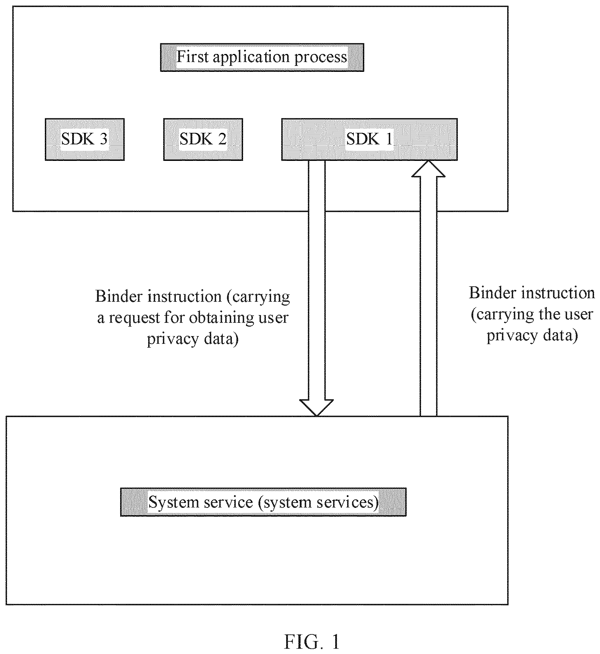

For example, as shown in FIG. 1, an SDK 1, an SDK 2, and an SDK 3 are integrated in a first application process. When the SDK 1 needs to obtain the user privacy data, the SDK 1 sends a binder instruction to the system service, and the binder instruction carries the request for obtaining the user privacy data. After receiving the binder instruction sent by the SDK 1, the system service identifies the request for obtaining the user privacy data in the binder instruction. The system service returns a binder instruction to the SDK 1, and the binder instruction carries the user privacy data. After receiving the binder instruction returned by the system service, the SDK 1 identifies and obtains the user privacy data.

With development of a mobile Internet and wide-ranging use of intelligent mobile terminals, a security issue of a smartphone becomes a most concerned problem in a mobile Internet industry and a mobile Internet user. With rapid development of the mobile Internet, with gradual expansion of a quantity and a scale of developers, many SDK tools and middlewares for providing various services to the developers are derived, for example, an SDK middleware that provides an advertisement promotion service, an SDK middleware that provides message and data push, and an SDK middleware that provides application promotion and distribution. These SDK middlewares provide the developers with various common functions by opening development interfaces, which greatly facilitates the developers. Currently, SDKs on an Android platform are widely used. An officially launched APP usually integrates about 20 SDKs. When SDKs are widely used, security issues related to the SDKs are increasingly concerned. Insecure network communication may cause user privacy disclosure. For example, the SDK may have a security vulnerability, and privately collect user privacy data, and some malicious SDKs use the APP to perform a malicious operation. Some SDKs also have a hot update function, which can dynamically issue code from a cloud for execution during running. In this case, a user, including an APP developer, cannot accurately understand a specific execution behavior of an integrated SDK, leaving a security risk.

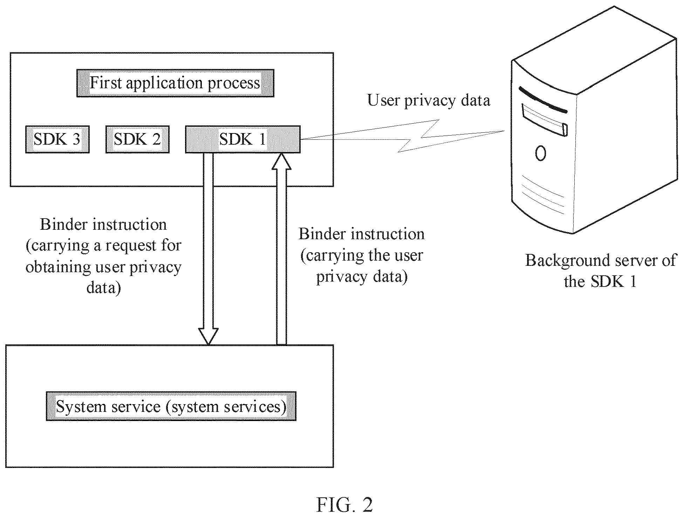

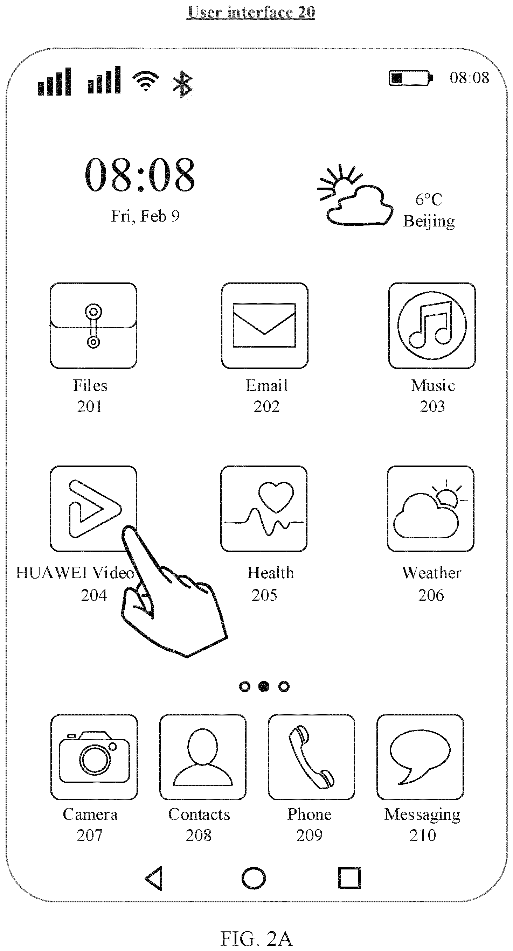

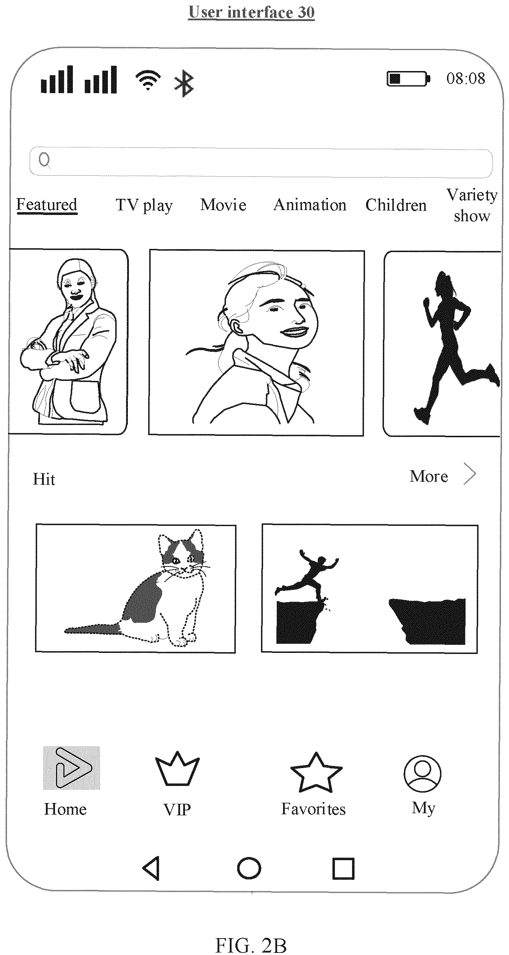

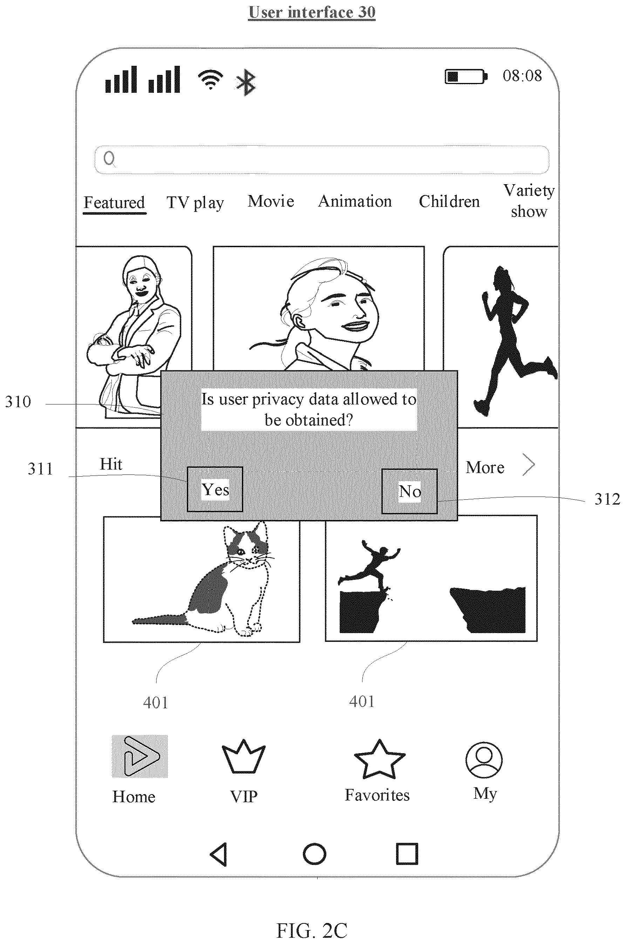

FIG. 2 is a schematic diagram of an example in which an SDK integrated in an application obtains user privacy data, causing user privacy data disclosure.

In some embodiments, when a user logs in to an application for a first time, the application asks a user whether to allow to obtain privacy data. After the user agrees, all SDKs integrated in the application obtain the permission to obtain user privacy data. When the user disagrees, all the SDKs integrated in the application have no permission to obtain the user privacy data.

For example, FIG. 2A to FIG. 2C are UI diagrams of an example in which HUAWEI Video asks a user whether to allow to obtain user privacy data.

FIG. 2A shows an example of a user interface 20 of an electronic device 100. The user interface 20 may include icons of some applications, for example, an icon 201 of Files, an icon 202 of Email, an icon 203 of Music, an icon 204 of HUAWEI Video, an icon 205 of Health, an icon 206 of Weather, an icon 207 of Camera, an icon 208 of Contacts, an icon 209 of Phone, and an icon 210 of Messaging. In some embodiments, the user interface 20 may include more or fewer application icons. In some embodiments, a user interface 30 may include icons of some applications different from applications shown in FIG. 2A, which is not limited herein.

The electronic device 100 may start a video application in response to a user operation performed on the icon 204 of HUAWE1 Video on the user interface 20. FIG. 2B shows an example of a user interface 30 displayed after an electronic device 100 starts a video application. The user interface 30 is a home page provided by the application "HUAWEI Video". As shown in FIG. 2B, one or more video images are displayed on the user interface 30. The video image may be dynamic or static. In addition, the user interface 30 may further display a bottom menu bar, a search box, a sub-channel entry, and the like. This is not limited in this embodiment of this application.

After the electronic device 100 displays the user interface 30, as shown in FIG. 2C, the electronic device 100 displays a prompt box 310 in a floating manner on the user interface 30. The prompt box 310 includes prompt information of "is user privacy data allowed to be obtained", a control 311, and a control 312.

When the electronic device 100 receives a tap operation performed by the user on the control 311, the electronic device 100 allows the electronic device 100 to obtain the user privacy data, and all SDKs integrated in the application obtain permission to obtain the user privacy data. When the electronic device 100 receives a tap operation performed by the user on the control 312, the electronic device 100 does not allow the electronic device 100 to obtain the user privacy data, and all the SDKs integrated in the application have no permission to obtain the user privacy data.

An SDK 1, an SDK 2, and an SDK 3 are integrated in a first application process. When the SDK 1 needs to obtain the user privacy data, the SDK 1 sends a binder instruction to a system service, and the binder instruction carries a request for obtaining the user privacy data. After receiving the binder instruction sent by the SDK 1, the system service identifies the request for obtaining the user privacy data in the binder instruction. The system service returns a binder instruction to the SDK 1, and the binder instruction carries the user privacy data. After receiving the binder instruction returned by the system service, the SDK 1 identifies and obtains the user privacy data.

The SDK 1 sends the user privacy data to a background server of the SDK 1, causing user privacy data disclosure.

Currently, there is a solution for how to restrict an SDK integrated in an application to obtain user privacy data, that is, which is implemented by using an isolated process (isolated process). That is, the electronic device places an SDK that needs to be controlled in the isolated process. This isolated process lias no permission, cannot access any external data, and can only perform simple data communication with an application process.

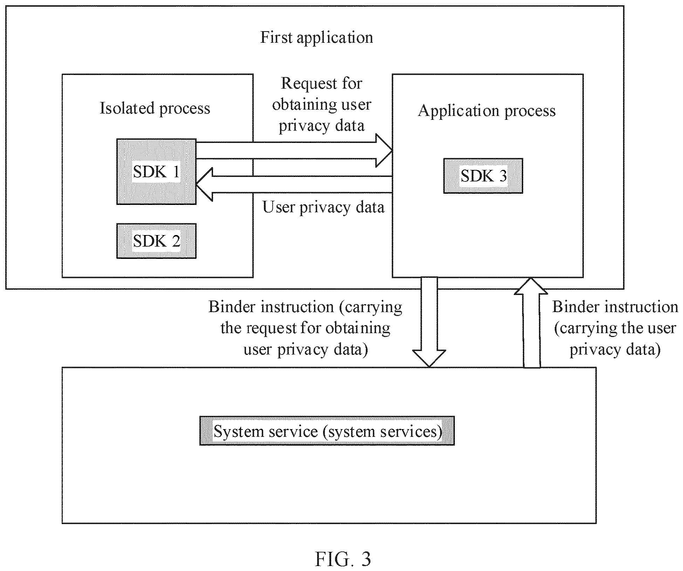

FIG. 3 is a schematic diagram of an example in which an electronic device restricts, by using an isolated process, an SDK to obtain user privacy data.

For example, a developer needs to integrate SDKs in a first application, and the SDKs include the SDK 1, the SDK 2, the SDK 3, and the like. Before integrating the SDK 1, the SDK 2, and the SDK 3 in the first application, the developer finds that in addition to completing basic functions, the SDK 1 and the SDK 2 additionally obtain the user privacy data, causing user privacy data disclosure. Therefore, the developer places the SDK 1 and the SDK 2 in the isolated process, and places the SDK 3 in an application process.

When an SDK is placed in the isolated process, the SDK in the isolated process cannot directly communicate with the system service through binder, but first communicates with the application process. The application process acts as an agent to initiate a request to the system service as an agent.

When the SDK 1 needs to obtain the user privacy data, the SDK 1 first sends the request for obtaining the user privacy data to the application process. Then, the application process sends a binder instruction to the system service, and the binder instruction carries the request of the SDK 1 for obtaining the user privacy data. After receiving the binder instruction, the system service identifies the request for obtaining the user privacy data in the binder instruction, and the system service sends the user privacy data to the application process. Then, the application process sends the user privacy data to the SDK 1. The SDK 1 obtains the user privacy data.

However, during code development, the SDK that needs to be controlled needs to be manually placed in the isolated process. If the SDK really needs to obtain necessary data, communication code between the SDK and the application process needs to be manually written, otherwise, even a normal function cannot be completed. For a developed application, a code structure of a program needs to be greatly modified, which is often unacceptable.

Second, some SDKs are naturally unable to be placed in the isolated process, for example, advertising-type SDKs, which need to be embedded in a main program interface. If the advertising-type SDKs are placed in the isolated process, advertisements cannot be displayed.

Therefore, this application provides a user privacy protection method. The method includes: The SDKs of the application in the electronic device 100 need to communicate with the system service by using a binder communication mechanism. Therefore, the electronic device 100 can intercept (HOOK) a binder interface invocation for obtaining target data. After having an intercept capability, the electronic device 100 can control, by using a solution of positioning the SDK by using a call stack, behavior of the SDK for obtaining the target data.

Obtaining the target data may be obtaining the user privacy data, accessing a network, and the like. The user privacy data includes but is not limited to a device identifier, a wireless network address, and a Bluetooth address of the electronic device 100, contacts and contact information (for example, phone numbers) of the contacts stored in the electronic device 100, a call record stored in the electronic device 100, an SMS message in the electronic device 100, a name list of applications downloaded in the electronic device 100, location information of the electronic device 100, a system account (for example, a Huawei account) of the electronic device 100, an image, a video, a document, and sound recording stored in the electronic device 100, application usage permission (for example, camera usage permission) in the electronic device 100, storage permission in the electronic device 100, and the like. A type of obtained target data is not limited in this application. An embodiment of this application uses an example in which obtaining the target data is obtaining the user privacy data for description.

In this way, the electronic device 100 can effectively monitor each SDK integrated in the application for controlling, to prevent each SDK from secretly collecting privacy data in a mobile phone of the user without knowledge of an application developer and an application user by using permission granted to the application by the user. This protects security of the user privacy data.

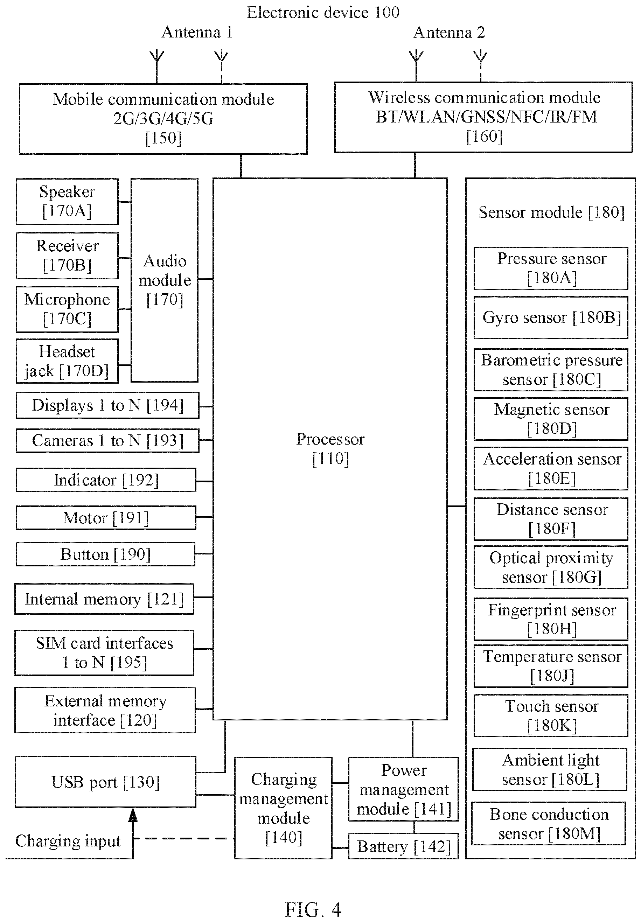

FIG. 4 is a schematic diagram of a structure of an electronic device 100.

A device type of the electronic device 100 may include a mobile phone, a television, a tablet computer, a speaker, a watch, a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR)/virtual reality (virtual reality, VR) device, and the like. A device type of the electronic device 100 is not specifically limited in embodiments of this application.

The electronic device 100 is used as an example below to describe embodiments in detail. It should be understood that the electronic device 100 shown in FIG. 4 is merely an example, and the electronic device 100 may have more or fewer components than those shown in FIG. 4, or may combine two or more components, or may have different component configurations. Components shown in the figure may be implemented in hardware, software, or a combination of hardware and software including one or more signal processing and/or application-specific integrated circuits.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, and an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that a structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated in one or more processors.

The controller may be a nerve center and a command center of the electronic device 100. The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, 12C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The 12C interface is a two-way synchronization serial bus, and includes a serial data line (serial data line, SDL) and a serial clock line (serial clock line, SCL). In some embodiments, the processor 110 may include a plurality of groups of 12C buses. The processor 110 may be coupled to the touch sensor 180K, a charger, a flash, the camera 193, or the like through different 12C bus interfaces. For example, the processor 110 may be coupled to the touch sensor 180K through the 12C interface, so that the processor 110 communicates with the touch sensor 180K through the 12C bus interface, to implement a touch function of the electronic device 100.

The I2S interface may be used for audio communication. In some embodiments, the processor 110 may include a plurality of groups of 12S buses. The processor 110 may be coupled to the audio module 170 through the 12S bus, to implement communication between the processor 110 and the audio module 170. In some embodiments, the audio module 170 may transmit an audio signal to the wireless communication module 160 through the 12S interface, to implement a function of answering a call by using a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset. Both the 12S interface and the PCM interface may be configured to perform the audio communication.

The UART interface is a universal serial data bus and used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through tire UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an 12C interface, an 12S interface, a UART interface, an MIPI interface, or the like.

The USB port 130 is a port that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio by using the headset. Alternatively, the port may be configured to connect to another electronic device, for example, an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input by using a wireless charging coil of the electronic device 100. The charging management module 140 may further supply power to the electronic device by using the power management module 141 when the battery 142 is charged.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be multiplexed to improve antenna utilization. For example, the antenna 1 may be multiplexed as a diversity antenna in a wireless local area network. In some other embodiments, the antennas may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert, by using the antenna 1, the signal into an electromagnetic wave for radiation. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the electronic device 100 and is for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the signal into an electromagnetic wave for radiation.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 can implement a photographing function by using the ISP, the camera 193, the video codec, the GPU, the display 194, the application processor, and the like.

The ISP is configured to process data fed back by the camera 193. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An object generates, through a lens, an optical image to be projected to a photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)1, MPEG2, MPEG3, and MPEG4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented by using the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 by using the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various functional applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) created in a process of using the electronic device 100, and the like. In addition, the internal memory 121 may include a high-speed random access memory, and may further include a nonvolatile memory, for example, at least one magnetic disk storage device, a flash memory device, or a universal flash storage (universal flash storage, UFS).

The electronic device 100 may implement an audio function, for example, music playing and sound recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or speech information is received by using the electronic device 100, the receiver 170B may be put close to a human ear to listen to a voice.

The microphone 170C, also referred to as a "mike" or a "microphone", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, to implement a directional sound recording function and the like.

The headset jack 170D is configured to connect to a wired headset. The headset jack 170D may be the USB port 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation based on the pressure sensor 180A. The electronic device 100 may calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an icon of the application "Messaging", an instruction for viewing an SMS message is executed. When a touch operation whose touch operation intensity is greater than or equal to the first pressure threshold is performed on the icon of the application "Messaging", an instruction for creating an SMS message is executed.

The gyro sensor 180B may be configured to determine a motion posture of the electronic device 100. In some embodiments, angular velocities of electronic device 100 around three axes (which are x, y, and z axes) may be determined by using the gyro sensor 180B. The gyro sensor 180B may be configured to implement image stabilization during shooting. For example, when the shutter is pressed, the gyro sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the electronic device 100 calculates an altitude by using the barometric pressure measured by the barometric pressure sensor 180C, to assist in positioning and navigation.

The magnetic sensor 180D includes a Hall effect sensor. The electronic device 100 may detect opening and closing of a flip cover leather case by using the magnetic sensor 180D. In some embodiments, when the electronic device 100 is a flip device, the electronic device 100 may detect opening and closing of the flip by using the magnetic sensor 180D. Further, a feature such as automatic unlocking of the flip cover is set based on a detected opening or closing state of the leather case or opening or closing state of the flip cover.

The acceleration sensor 180E may detect magnitudes of accelerations in various directions (usually on three axes) of the electronic device 100, may detect a magnitude and a direction of gravity when the electronic device 100 is static, and may be further configured to identify a posture of the electronic device, and is used in switching between a landscape mode and a portrait mode, a pedometer, or another application.

The distance sensor 180F is configured to measure a distance. The electronic device 100 may measure a distance in an infrared manner or a laser manner. In some embodiments, in a shooting scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically perform screen-off for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy by using the temperature detected by the temperature sensor 180J. For example, when a temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142, to prevent abnormal power-off caused by a low temperature.

The touch sensor 180K is also referred to as a "touch panel". The touch sensor 180K may be disposed on the display 194, and the touch sensor 180K and the display 194 form a touchscreen, which is also referred to as a "touch control screen". The touch sensor 180K is configured to detect a touch operation performed on or near the touch sensor 180K. The touch sensor may transfer the detected touch operation to the application processor, to determine a type of a touch event. A visual output related to the touch operation may be provided by using the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible to different types of SIM cards. The SIM card interface 195 is also compatible to an external storage card. The electronic device 100 interacts with a network by using the SIM card, to implement a call function, a data communication function, and the like. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In this embodiment of the present invention, an Android system with a layered architecture is used as an example to describe a software structure of the electronic device 100.

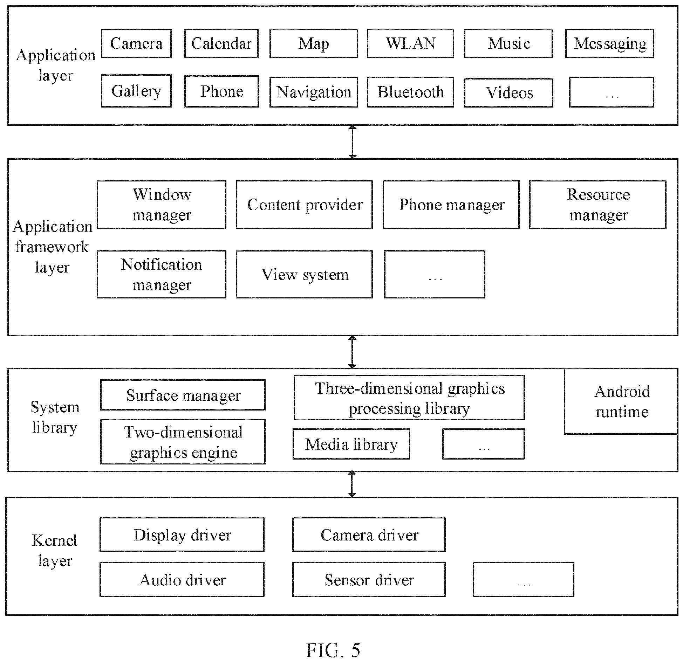

FIG. 5 is a block diagram of a software structure of an electronic device 100 according to an embodiment of the present invention.

In the layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 5, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for the applications at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and a browsing bookmark, an address book, and the like.

The view system includes visual controls such as a control for displaying a text and a control for displaying an image. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, declining, or the like).

The resource manager provides various resources for an application such as a localized character string, an icon, a picture, a layout file, and a video file.

The notification manager enables an application to display notification information in a status bar, and may be used to convey a notification message. The notification message may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, a prompt tone is given, the electronic device vibrates, or the indicator light blinks.

The Android runtime includes a kernel library and a virtual machine. The Android runtime is responsible for scheduling and management of the Android system.

The kernel library includes two parts: a function that needs to be called in java language and a kernel library of Android.

The application layer and the application framework layer are run on the virtual machine. The virtual machine executes java files at the application layer and the application framework layer as binary files. The virtual machine is configured to implement functions such as object life cycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing capture scenario.

When the touch sensor 180K receives a touch operation, a corresponding hardware interruption is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, to start the camera application. Then, the camera driver is started by invoking the kernel layer, and a static image or a video is captured by using the camera 193.

A plurality of SDKs are integrated in the first application. To distinguish among the plurality of SDKs, each SDK has a package name, and all logic code of the SDK is placed in the package name. That is, an SDK corresponding to a package name can be obtained by finding the package name.

For example, Huawei provides a developer with an SDK named huid, and the SDK is placed in a package name being com.huawei.hms.huid.

The following is program code corresponding to the SDK whose package name is huid.
com.huawei.hms;
account.interna1.p000ui.activity;
common;
hwid;
intemal.p001ui.activity;
AccountAuthHmsCliernt:
AccountAuthHmsCliemtBuilder;
AccountAuthMemCache;
AccountAuthUtil;
AccountCancelAuthorizationTaskApiCall;

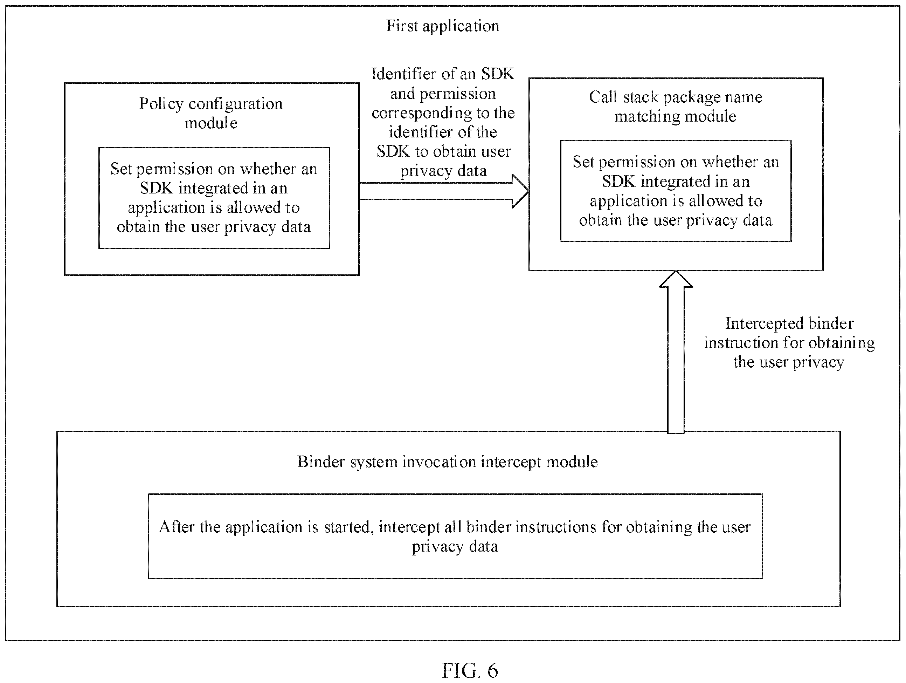

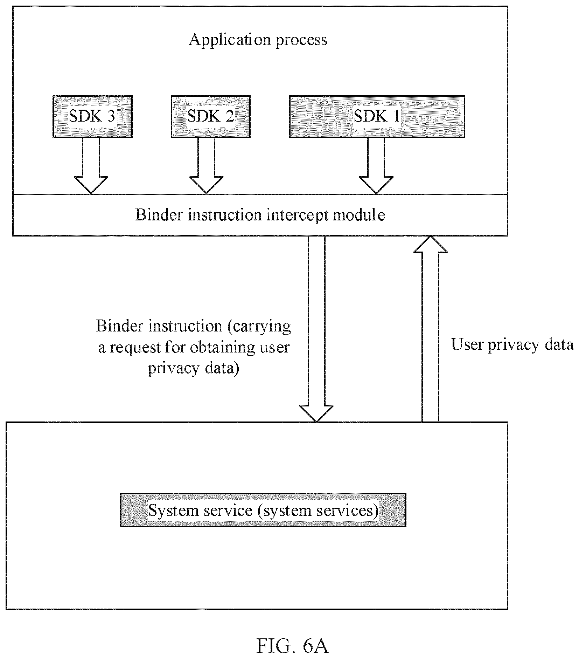

FIG. 6 is a diagram of an example of a system architecture according to an embodiment of this application.

The system includes a policy configuration module, a binder system invocation intercept module, and a call stack package name matching module.

The policy configuration module is configured to receive a setting of a developer, and set permission of an SDK integrated in a first application. Permissions of an SDK include but are not limited to the following:
1. The SDK is allowed to obtain real user privacy data.
2. The SDK is allowed to obtain user privacy data, but user privacy data returned by a system service to the SDK is false user privacy data, that is, the returned user privacy data is not the real user privacy data.
3. The SDK is not allowed to obtain the user privacy data.

It should be noted that the real user privacy data is user privacy data filled in by a user in an electronic device 100, and the electronic device 100 stores the user privacy data in the system service.

Before using the policy configuration module to set the permission of the SDK, the developer needs to specify permission of which SDKs integrated in the application are set to allow to obtain the user privacy data, and permission of which SDKs are set not to allow to obtain the user privacy data.

For example, as shown in FIG. 6A, an SDK 1, an SDK 2, and an SDK 3 are integrated in the first application. The developer sets permission of the SDK 1 not to allow to obtain the user privacy data. The developer sets permission of the SDK 2 to allow to obtain the real user privacy data. The developer sets the permission of the SDK 1 to allow to obtain the user privacy data, but the user privacy data returned by the system service to the SDK is the false user privacy data, that is, the returned user privacy data is not the real user privacy data.

The policy configuration module is configured to set permission on whether an SDK integrated in an application is allowed to obtain the user privacy data. The policy configuration module sets the permission on whether the SDK integrated in the application is allowed to obtain the user privacy data. In essence, the policy configuration module sets permission on whether a package name of the SDK integrated in the application is allowed to obtain the user privacy data.

It should be noted that the policy configuration module may set permission for package names of all SDKs in the first application, or the policy configuration module may set permission for package names of some SDKs in the first application. This is not limited in this embodiment of this application.

In some case embodiments, after the first application is developed and officially launched, the developer may modify permission of some SDKs integrated in the first application to obtain the user privacy data.

For example, permission of the SDK 1 and permission of the SDK 2 are set not to allow to obtain the user privacy data, and permission of the SDK 3 is set to allow to obtain the user privacy data. In this case, after the first application is developed and officially launched, the developer may modify the permission of the SDK 1, and modified permission of the SDK 1 is to allow to obtain the real user privacy data.

The policy configuration module sends, to the call stack package name matching module, the permission of the SDK integrated in the first application to obtain the user privacy data.

In some embodiments, because the permission of the SDK in the first application to obtain the user privacy data may change, the policy configuration module may periodically (for example, one week) send, to the call stack package name matching module, the permission of the SDK integrated in the first application to obtain the user privacy data.

The binder system invocation intercept module is configured to receive a binder instruction sent by the SDK in the first application, and parse out a function of the binder instruction. When the function of the binder instruction is used to obtain the user privacy data, the binder system invocation intercept module intercepts the binder instruction.

After the binder system invocation intercept module intercepts the binder instruction, the binder system invocation intercept module sends the binder instruction used to obtain the user privacy to the calling package name matching module.

For example, it is assumed that the SDK 1 sends a binder instruction to the system service, and the binder instruction carries a request for obtaining the user privacy data. After the binder system invocation intercept module intercepts the binder instruction sent by the SDK 1, the binder system invocation intercept module sends the binder instruction sent by the SDK 1 to the calling package name matching module.

The calling package name matching module is configured to call a traceback call stack based on the binder instruction used to obtain the user privacy, and find a package name of an SDK of the binder instruction used to obtain the user privacy. Then, the calling package name matching module matches the package name of the SDK used to obtain the user privacy with a package name of a preset SDK with set permission. If the calling package name matching module finds, from the package name of the preset SDK with set permission, a package name of an SDK that is consistent with the package name of the SDK used to obtain the user privacy, the calling package name matching module obtains permission corresponding to the package name of the SDK.

Herein, that the calling package name matching module is configured to call the traceback call stack based on the binder instruction for obtaining the user privacy, and find the package name of the SDK of the binder instruction used to obtain the user privacy is described in detail in a subsequent embodiment, and is not described in detail herein in this application.

Then, the calling package name matching module sends the permission corresponding to the package name of the SDK to the binder system invocation intercept module. If the permission corresponding to the package name of the SDK is to allow to obtain the real user privacy data, the binder system invocation intercept module returns the real user privacy data to the SDK. If the permission corresponding to the package name of the SDK is to allow the SDK to obtain the user privacy data, but the user privacy data returned by the system service to the SDK is the false user privacy data, the binder system invocation intercept module returns the false user privacy data to the SDK. If the permission corresponding to the package name of the SDK is not to allow the SDK to obtain the user privacy data, the binder system invocation intercept module does not return any data to the SDK.

For example, if the calling package name matching module determines that permission of the SDK 1 sending the binder instruction is to allow to obtain the user privacy data, the binder system invocation intercept module returns the user privacy data to the SDK 1 in a form of a binder instruction, and the SDK 1 obtains the user privacy data.

It should be noted that the policy configuration module, the binder system invocation intercept module, and the call stack package name matching module may be independent functional modules, or may be combined in pairs into one functional module, or may be a functional module. This is not limited in this application.

By using the foregoing method, a developer of each application may add the policy configuration module, the binder system invocation intercept module, and the call stack package name matching module to a to-be-developed application, to monitor an SDK integrated in each application, and protect security of the user privacy. In addition, the solution can be popularized widely and has a strong adaptability.

That the calling package name matching module calls the traceback call stack based on the binder instruction for obtaining the user privacy, and finds the package name of the SDK of the binder instruction used to obtain the user privacy is described in the following.

As mentioned above, the logic code of each SDK is placed under in the package name belonging to the SDK. In addition, there is a concept of a call stack in a code execution process, that is, that a previous call site is in which function can be traced level by level.

After the calling package name matching module obtains the binder instruction used to obtain the user privacy, the calling package name matching module analyzes executed code, and obtains a name of a function corresponding to the binder instruction used to obtain the user privacy.

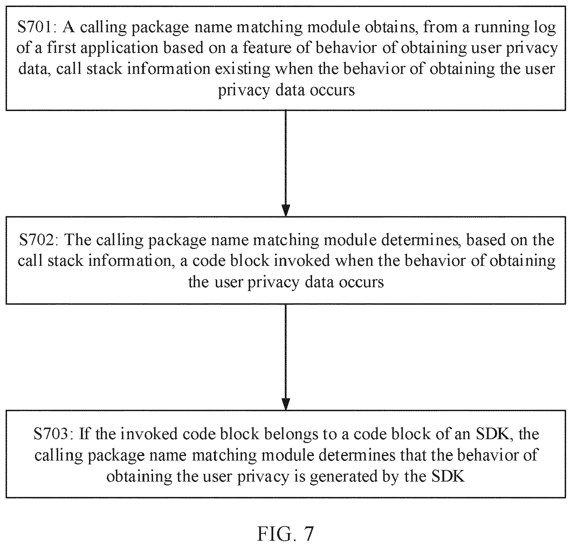

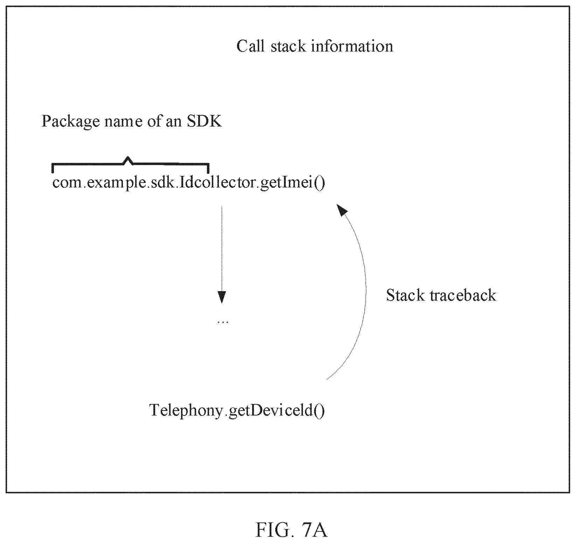

FIG. 7 is a flowchart of an example method for calling, by a calling package name matching module, a traceback call stack based on a binder instruction for obtaining user privacy, and finding a package name of an SDK of the binder instruction used to obtain the user privacy.

S701: The calling package name matching module obtains, from a running log of the first application based on a feature of behavior of obtaining the user privacy data, call stack information existing when the behavior of obtaining the user privacy data occurs.

Specifically, the calling package name matching module obtains, from the running log of the first application based on the feature of the behavior of obtaining the user privacy, the call stack information existing when the behavior of obtaining the user privacy data occurs. The call stack information includes a call chain when the behavior of obtaining the user privacy data occurs.

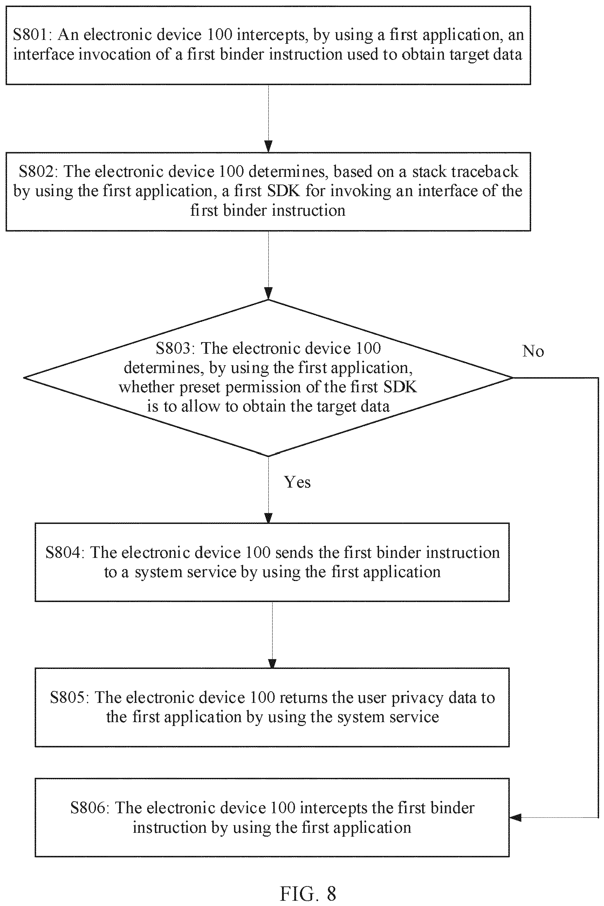

For example, obtaining the call stack information existing when the behavior of obtaining the user privacy data occurs may be obtaining a call chain shown in FIG. 8.

S702: The calling package name matching module determines, based on the call stack information, a code block invoked when the behavior of obtaining the user privacy data occurs.

Specifically, the calling package name matching module removes a related system function in the call chain from the obtained call stack information, and obtains function information of an actual call site of the call chain. The calling package name matching module determines, based on the function information of the actual call site of the call chain, the invoked code block generated when the behavior of obtaining the user privacy data occurs. That is, the calling package name matching module finds, by using a call stack traceback based on current function information for obtaining the user privacy data, function information of an actual call site calling the function information.

For example, refer to FIG. 7A. FIG. 7A is a schematic diagram of an example of call stack information.

The calling package name matching module first removes some system-related calls in the call chain, for example, java.net and com.android.okhttp-related calls in the call chain are searched from front to back. In FIG. 7A, a function "getDeviceld" in a Telephony class is the function information for obtaining the user privacy data (for example, an IMEI number of the electronic device 100). The calling package name matching module finds, by using a stack traceback, function information of an actual call site calling the function "getDeviceld". The function information of the actual call site is "getlmei".

In some embodiments, the calling package name matching module may determine, based on a prefix of a class name of the function information of the actual call site of the call chain, the code block invoked when the behavior of obtaining the user privacy data occurs. That is, in FIG. 7A, a prefix com.example.sdk of a class name IdCollector whose function information of the actual call site is "getImei" is the code block invoked when the behavior of obtaining the user privacy data occurs.

S703: If the invoked code block belongs to a code block of an SDK, the calling package name matching module determines that the behavior of obtaining the user privacy is generated by the SDK.

For example, if the package name of the SDK is com.example.sdk, and if it is determined that the invoked code block belongs to a code block of com.example.sdk, it is determined that the behavior of obtaining the user privacy data is generated by the SDK.

In this embodiment of this application, all behavior of obtaining the user privacy data can be monitored, and then target behavior belonging to the SDK is determined by performing backtracking analysis on the call stack information. Therefore, this manner can monitor a behavior feature of a specific SDK, reduce a potential risk, and improve security of an application use process.

FIG. 8 is a schematic flowchart of a user privacy protection method according to an embodiment of this application.

S801: An electronic device 100 intercepts, by using a first application, an interface invocation of a first binder instruction used to obtain target data (first target data).

The electronic device 100 intercepts, by using the first application, the interface invocation of the first binder instruction used to obtain the target data.

The target data may be user privacy data. The user privacy data may include but is not limited to: a device identifier of the electronic device 100, an identifier list of applications installed in the electronic device 100, user personal information stored in the electronic device 100, and the like. The user privacy data may further include other more data. This is not limited in this embodiment of this application.

In some embodiments, before the first application is launched, a developer of the first application may integrate a binder system invocation intercept module in the first application. The binder system invocation intercept module is configured to: after the application is started, identify an interface invocation of a binder instruction for obtaining the target data (for example, the user privacy data), and intercept interface invocation s of all binder instructions used to obtain the target data (for example, the user privacy data).

In a possible implementation, after the first application is launched, the developer of the first application does not integrate the binder system invocation intercept module in the first application. The developer of the first application may integrate the binder system invocation intercept module in the first application after the first application is launched. A time at which the binder system invocation intercept module is integrated in the first application is not limited in this application.

When the first binder instruction is used to obtain the user privacy data, the binder system invocation intercept module pre-installed in the first application intercepts the first binder instruction.

For example, if the first application is Huawei music and video applications, a plurality of SDKs, for example, an SDK 1, an SDK 2, and an SDK 3, are integrated in Huawei Video. If the SDK 1 needs to obtain the user privacy data, the SDK 1 invokes an international mobile equipment identity (International Mobile Equipment Identity, IMEI) of the electronic device 100 in a system service through an interface of the binder instruction (for example, the first binder instruction). In this case, the first application intercepts the interface invocation of the first binder instruction by using the binder system invocation intercept module. For example, the interface invocation of the first binder instruction is Telephony.getDeviceId(). The interface invocation is to obtain an IMEI number of the electronic device 100.

S802: The electronic device 100 determines, based on a stack traceback by using the first application, a first SDK for invoking an interface of the first binder instruction.

After the first application intercepts, by using the binder system invocation intercept module, the interface of the first binder instruction used to obtain the target data, the first application determines, based on the stack traceback, the first SDK for invoking the interface of the first binder instruction.

Specifically, the first application obtains call stack information of the interface of the first binder instruction, and determines, based on the call stack information of the interface of the first binder instruction, a code block for invoking the interface of the first binder instruction. If the code block for invoking the interface of the first binder instruction belongs to a code block of the first SDK, the first application determines that the first SDK invokes the interface of the first binder instruction.

In some embodiments, before the first application is launched, the developer of the first application may integrate a calling package name matching module in the first application. The calling package name matching module is configured to: after the application is started, determine the call stack information of the interface of the first binder instruction used to obtain the target data, and determine, based on the call stack information of the interface of the first binder instruction, a code block for invoking the interface of the first binder instruction. If the code block for invoking the interface of the first binder instruction belongs to the code block of the first SDK, the first application determines that the code block for invoking the interface of the first binder instruction is the first SDK.

For example, the calling package name matching module determines, in the call stack information of the interface of the first binder instruction, that an SDK "com.sina.weibo" invokes the interface of the first binder instruction, and "com.sina.weibo" is a package name of the SDK.

In a possible implementation, after the first application is launched, the developer of the first application does not integrate the calling package name matching module in the first application. The developer of the first application may integrate the calling package name matching module in the first application after the first application is launched. A time at which the calling package name matching module is integrated in the first application is not limited in this application.

It may be understood that the binder system invocation intercept module and the calling package name matching module may be two independent modules integrated in the first application, or may be a same module. The module may implement functions of the two modules of the binder system invocation intercept module and the calling package name matching module. Forms of the binder system invocation intercept module and the calling package name matching module are not limited in this application.

Specifically, for how to determine the first SDK by the calling package name matching module based on the call stack information of the interface of the first binder instruction, refer to the embodiment shown in FIG. 7. Details are not described herein again in this application.

S803: The electronic device 100 determines, by using the first application, whether preset permission of the first SDK is to allow to obtain the target data.

After the first application determines that the first SDK invokes the interface of the first binder instruction, the first application determines whether the permission of the first SDK is to allow to obtain the target data. That is, the permission of the first SDK is pre-stored in the first application. If the permission of the first SDK pre-stored in the first application is to allow to obtain the target data, S804 is performed; otherwise, S806 is performed.

For example, permission of the SDK "com.sina.weibo" is pre-stored in the calling package name matching module. If the permission of the SDK "com.sina.weibo" is to allow to obtain the target data, S804 is performed; otherwise, S806 is performed.

In some embodiments, after the first application determines, by using the calling package name matching module, that the first SDK invokes the interface of the first binder instruction, the first application determines, by using the calling package name matching module, whether the permission of the first SDK is to allow to obtain the target data. That is, the calling package name matching module in the first application pre-stores the permission of the first SDK. If the permission of the first SDK pre-stored in the calling package name matching module is to allow to obtain the target data, S804 is performed; otherwise, S806 is performed.

The calling package name matching module pre-stores the permission of the first SDK. Specifically, another functional module, for example, a policy configuration module, is integrated in the first application. A function of the policy configuration module is to set whether an SDK integrated in the first application is allowed to obtain the target data. The policy configuration module sets permission on whether the SDK integrated in the application is allowed to obtain the target data. In essence, the policy configuration module sets permission on whether a package name of the SDK integrated in the application is allowed to obtain the target data.

It should be noted that the policy configuration module may set permission for package names of all SDKs in the first application, or the policy configuration module may set permission for package names of some SDKs in the first application. This is not limited in this embodiment of this application.

In some case embodiments, after the first application is developed and officially launched, the developer may modify permission of some SDKs integrated in the first application to obtain the target data.

For example, permission of the SDK 1 is set not to allow the target data. In this case, after the first application is developed and officially launched, the developer may modify the permission of the SDK 1, and modified permission of the SDK 1 is to allow to obtain the target data.

The policy configuration module sends, to the call stack package name matching module, the permission of the SDK integrated in the first application to obtain the target data.

In some embodiments, because the permission of the SDK in the first application to obtain the user privacy data may change, the policy configuration module may periodically (for example, one week) send, to the call stack package name matching module, the SDK integrated in the first application to obtain the target data.

In some embodiments, a user may manually set the permission of the SDK in the first application. In this way, the user can dynamically adjust the SDK permission in the first application based on a user requirement, improving user experience.

In this embodiment of this application, that the first application is a music application is used as an example for description.

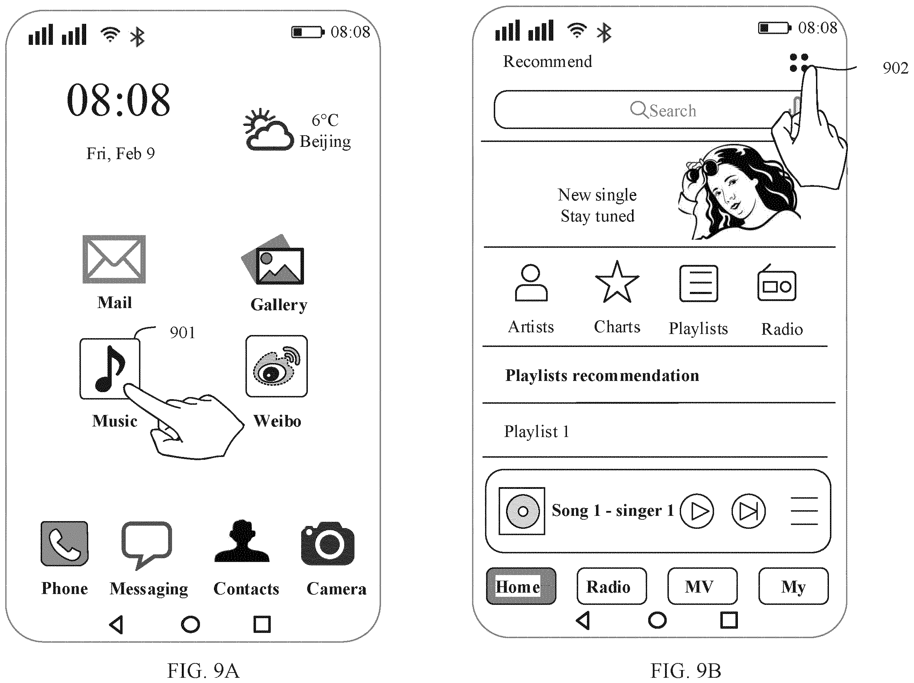

FIG. 9A to FIG. 9J are schematic diagrams of an example of how to modify permission of an SDK in a music application by an electronic device 100 based on user operations.

FIG. 9A shows an example of a desktop of an electronic device 100. The desktop includes icons of one or more applications, for example, an icon of an application "Mail", an icon of an application "Gallery", an icon 901 of an application "Music", an icon of an application "Weibo", an icon of an application "Phone", an icon of an application "Messaging", an icon of an application "Contacts", and an icon of an application "Camera". The desktop further shows information such as a date, weather, power, and a networking status.

As shown in FIG. 9A, the electronic device 100 receives an input operation (for example, a single-tap) performed by the user on the icon 901 of the application "Music". In response to the input operation of the user, the electronic device 100 displays a home screen of the application "Music" shown in FIG. 9B.

Optionally, after the electronic device 100 receives the input operation performed by the user on the icon 901 of the application "Music", the electronic device 100 may display prompt information, and the prompt information is used to prompt the user to read and agree to a privacy policy, so that the music application can be normally used. If the user has previously read and agreed to the privacy policy, the electronic device 100 may not display the prompt information.

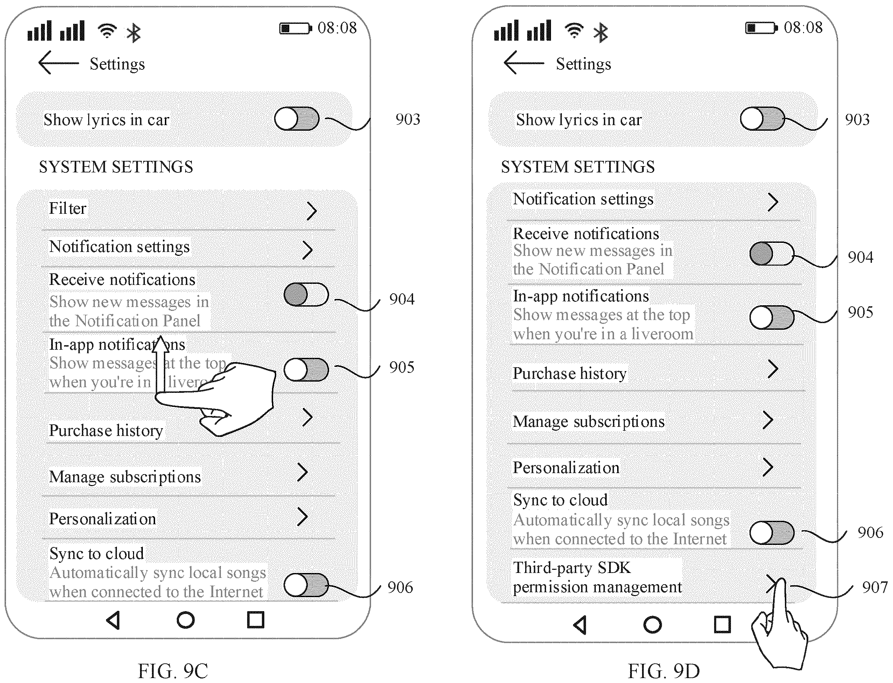

FIG. 9B shows an example of a home screen of a music application. The home screen of the music application includes a plurality of function icons and a control, for example, an icon "Search", an icon "Artists", an icon "Charts", an icon "Playlists", an icon "Radio", and a control 902 of "Settings". As shown in FIG. 9B, the electronic device 100 receives an input operation (for example, a single-tap) performed by the user on the control 902 of "Settings". In response to the input operation of the user, the electronic device 100 displays a setting interface shown in FIG. 9C.

FIG. 9C shows an example of a setting interface of a music application. The setting interface includes one or more setting controls of different functions, for example, a control 903. The electronic device 100 may control, by using the control 903, a function of "Show lyrics in car" to be turned on or off, and the function of "Show lyrics in car" is currently turned off. The setting interface further shows a plurality of system setting controls, for example, a control "Filter", a control "Notification settings", and a control 904. The electronic device 100 may control, by using the control 904, a function of "Receive notifications" to be turned on or off, and the function of "Receive notifications" is currently turned on. The setting interface further shows a control 905. The electronic device 100 may control, by using the control 905, a function of "In-app notifications" to be turned on or off, and the function of "In-app notifications" is currently turned off. The setting interface further shows a control "Purchase history", a control "Manage subscriptions", a control "Personalization", and a control 906. The electronic device 100 may control, by using the control 906, a function of "Sync to cloud" to be turned on or off, and the function of "Sync to cloud" is currently turned off.

As shown in FIG. 9C, the electronic device 100 may receive an upward sliding operation performed by the user on the setting interface, so that the electronic device 100 displays another setting control (for example, third-party SDK permission management 907) that is not shown in FIG. 9D.

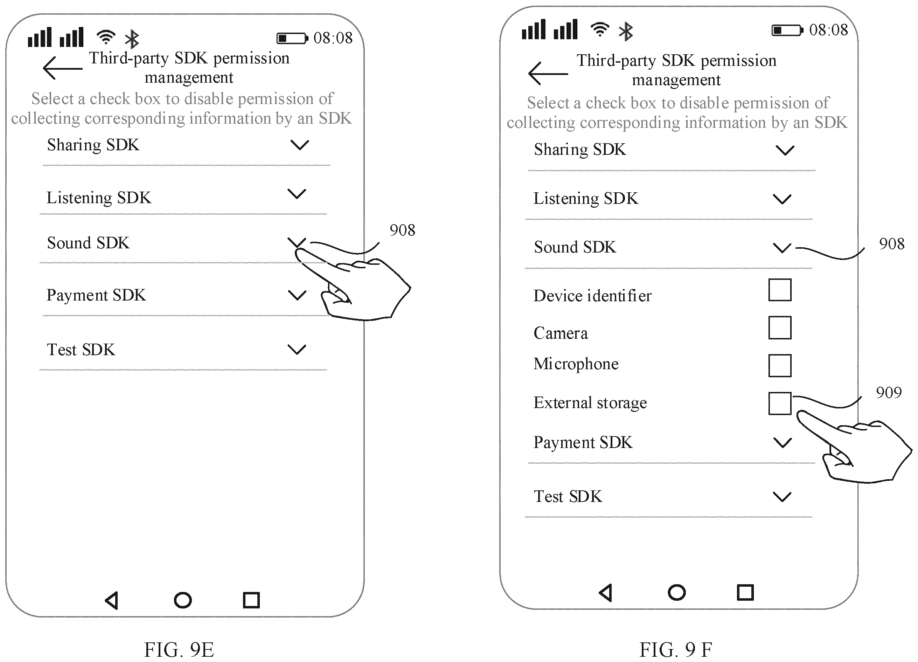

As shown in FIG. 9D, when the user needs to set permission of some SDKs, the electronic device 100 may receive an input operation (for example, a single-tap) performed by the user on the third-party SDK permission management 907. In response to the input operation of the user, the electronic device 100 displays an interface of third-party SDK permission management shown in FIG. 9E.

FIG. 9E shows an example of a plurality of SDKs integrated in a music application, for example, a sharing SDK, a listening SDK, a sound SDK, a payment SDK, and a test SDK.

It should be noted that FIG. 9E shows merely the example of the SDKs integrated in the music application. In another embodiment, another SDK different from the SDKs shown in FIG. 9E may be further integrated in the music application. This is not limited in this embodiment of this application.

It may be understood that one SDK may implement one or more preset functions, that is, the SDK may be configured with one or more different types of permission, and the one or more types of permission are used to implement the one or more preset functions.

The configured permission of the SDK includes any one or more of the following items: obtaining a device identifier, a wireless network address, and a Bluetooth address of the electronic device 100, contacts and contact information (for example, phone numbers) of the contacts stored in the electronic device 100, a call record stored in the electronic device 100, an SMS message in the electronic device 100, a name list of applications downloaded in the electronic device 100, location information of the electronic device 100, a system account (for example, a Huawei account) of the electronic device 100, an image, a video, a document, and sound recording stored in the electronic device 100, application usage permission (for example, camera usage permission) in the electronic device 100, storage permission in the electronic device 100, and the like.

In the following embodiment of this application, how to set permission of the sound SDK by the user is used as an example for description.

As shown in FIG. 9E, the electronic device 100 receives an input operation (for example, a single-tap) performed by the user on a control 908. In response to the input operation of the user, the electronic device 100 displays a user interface shown in FIG. 9F.

FIG. 9F shows an example of a plurality of types of permission of a sound SDK. The plurality of types of permission may be permission to obtain a device identifier, permission to invoke a camera application, permission to invoke a microphone, permission to access external storage, and the like. If the user sets the sound SDK to have the permission to obtain the device identifier, the sound SDK may enable the music application to obtain the device identifier. If the user sets the sound SDK to have the permission to invoke the camera application, the sound SDK may enable the music application to invoke the camera application. If the user sets the sound SDK to have the permission to invoke the microphone, the sound SDK may enable the music application to invoke the microphone. If the user sets the sound SDK to have the permission to access the external storage, the sound SDK may enable the music application to have the permission to access the external storage.

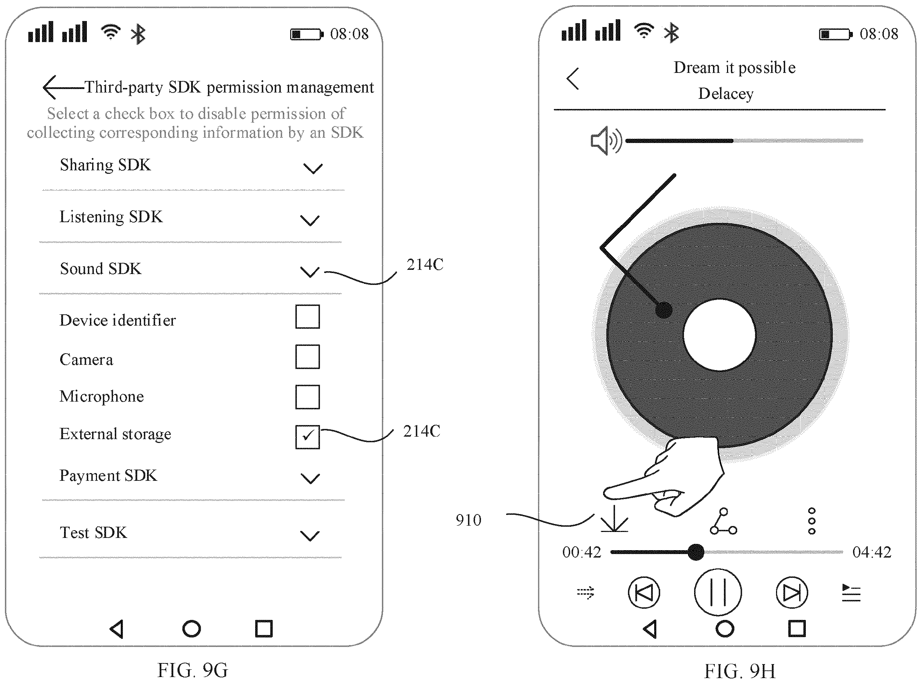

As shown in FIG. 9F, if the user does not want the music application to have the permission to access the external storage, the electronic device 100 may receive an input operation (for example, a single-tap) performed by the user on a control 909. In response to the input operation of the user, the electronic device 100 displays a user interface shown in FIG. 9G. As shown in FIG. 9G, the user forbids the sound SDK from having the permission to access the external storage.

In this case, the music application cannot access the external storage, which may be understood as that the music application cannot download a music file and save the music file locally.

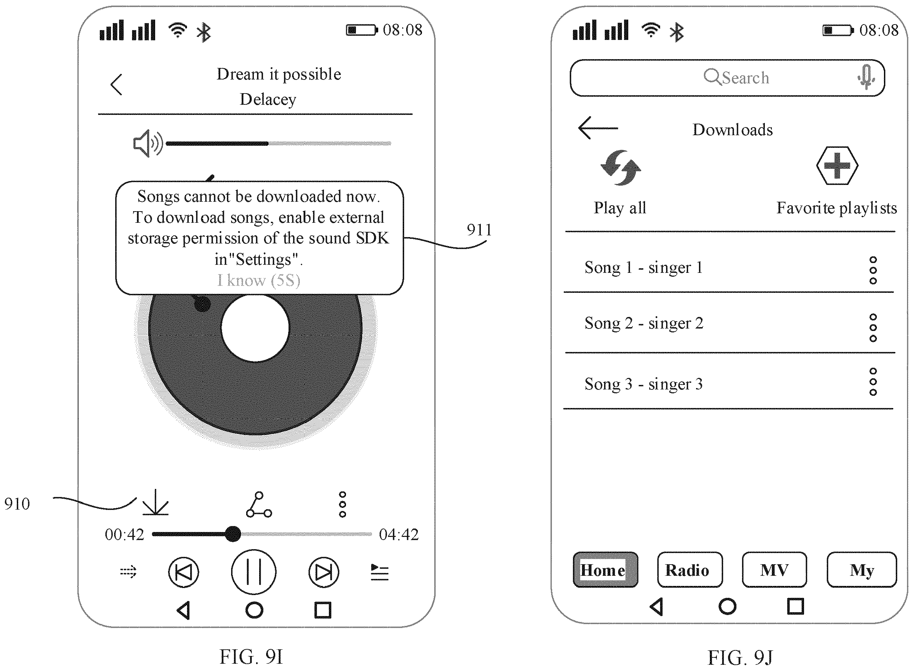

As shown in FIG. 9H, after the user forbids the sound SDK from having the permission to access the external storage, the electronic device 100 receives an input operation (for example, a single-tap) performed by the user on a download control on a music play interface. In response to the input operation of the user, because the music application cannot access the external storage, the electronic device 100 displays prompt information 911 shown in FIG. 9I. The prompt information 911 may be: Songs cannot be downloaded now. To download songs, enable external storage permission of the sound SDK in "Settings". The prompt information 911 is used to prompt the user that the music application currently does not have the permission to access the external storage, and to download songs, the external storage permission of the sound SDK needs to be enabled.

Optionally, after the electronic device 100 receives an input operation (for example, a single-tap) performed by the user on the control 909, if the music application currently does not have the permission to access the external storage, the electronic device 100 may not output the prompt information 911, that is, the electronic device 100 does not display any prompt information. Then, the user may open a download interface in the music application shown in FIG. 9J. Downloaded music displayed on the download interface includes "song 1-singer 1", "song 2-singer 2", and "song 3-singer 3", but does not include a song "Dream it possible-Delacey" just selected by the user as shown in FIG. 9H. It may be learned that the music selected by the user cannot be downloaded and saved locally. In this way, the electronic device 100 does not output the prompt information, avoiding affecting user experience.

It should be noted that FIG. 9A to FIG. 9J show merely an example of how to set the permission of the SDKs integrated in the application by the user, which should not constitute a limitation.

It may be understood that the binder system invocation intercept module, the calling package name matching module, and the policy configuration module may be three independent modules integrated in the first application, or may be a same module, or may be modules combined in pairs. Forms of the binder system invocation intercept module, the calling package name matching module, and the policy configuration module are not limited in this application.

S804: The electronic device 100 sends the first binder instruction to the system service by using the first application.

S805: The electronic device 100 returns the user privacy data to the first application by using the system service.

When the electronic device 100 determines, by using the first application, that the permission of the first SDK invoking the interface of the first binder instruction is to allow to obtain the target data, the first application sends, by using the calling package name matching module, information that the permission of the first SDK is to allow to obtain the target data to the binder system invocation intercept module. In this case, the binder system invocation intercept module issues the first binder instruction. The binder system invocation intercept module sends the first binder instruction to a subsystem service, and the first binder instruction is used to obtain the target data. After the system service returns the target data to the binder system invocation intercept module, the binder system invocation intercept module transmits the target data to the first SDK.

That is, the first application sends the first binder instruction used to obtain the target data to the system service. The system service receives and responds to the first binder instruction used to obtain the target data. The system service sends the target data to the first application. The first application receives the target data, and transmits the target data to the first SDK. The first SDK obtains the target data.

For example, the binder system invocation intercept module sends the first binder instruction used to obtain the target data to the system service. The system service receives and responds to the first binder instruction used to obtain the IMEI number of the electronic device 100. The system service sends the IMEI number of the electronic device 100 to the binder system invocation intercept module. The binder system invocation intercept module receives the IMEI number of the electronic device 100. The IMEI number of the electronic device 100 is transmitted to the SDK "com.sina.weibo", and the SDK "com.sina.weibo" obtains the IMEI number of the electronic device 100.

S806: The electronic device 100 intercepts the first binder instruction by using the first application.

When the electronic device 100 determines, by using the first application, that the permission of the first SDK invoking the interface of the first binder instruction is not to allow to obtain the target data, the first application sends, by using the calling package name matching module, information that the permission of the first SDK is not to allow to obtain the target data to the binder system invocation intercept module.

After the binder system invocation intercept module receives the information that the permission of the first SDK is not to allow to obtain the target data, the binder system invocation intercept module has the following two implementations:

Manner 1: The binder system invocation intercept module intercepts the first binder instruction, that is, the system service cannot receive the first binder instruction. The system service does not return any data to the binder system invocation intercept module, and the first SDK cannot obtain any data.

For example, the binder system invocation intercept module intercepts the first binder instruction, that is, the system service does not receive the first binder instruction. The system service does not return any data to the binder system invocation intercept module, and the SDK "com.sina.weibo" cannot obtain any data.

Manner 2: The binder system invocation intercept module intercepts the first binder instruction, and sends a second instruction to the system service. The second instruction is used to instruct the system service to return false target data to the binder system invocation intercept module. After the binder system invocation intercept module receives the false target data returned by the system service, the binder system invocation intercept module transmits the false target data to the first SDK, and the first SDK obtains the false target data.

For example, the binder system invocation intercept module intercepts the first binder instruction, and sends a second instruction to the system service. The second instruction is used to instruct the system service to return a false IMEI number of the electronic device 100 to the binder system invocation intercept module. After the binder system invocation intercept module receives the false IMEI number of the electronic device 100 returned by the system service, the binder system invocation intercept module transmits the false IMEI number of the electronic device 100 to the SDK "com.sina.weibo", and the SDK "com.sina.weibo" obtains the false IMEI number of the electronic device 100. For example, a real IMEI number of the electronic device 100 is "HUAWEI P40 PRO", and the false IMEI number of the electronic device 100 is "HUAWEI MATE 20".

In the foregoing descriptions, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not leave the essence of the corresponding technical solutions out of the scope of the technical solutions in the embodiments of this application.

## Claims

1. A user privacy protection method, wherein the method comprises:
obtaining, by a first application of an electronic device, a first communication binder instruction for invoking first target data by a first software development kit SDK;
obtaining, by the first application of the electronic device, an identifier of the first SDK; and
when the first application of the electronic device determines, based on the identifier of the first SDK, that the first SDK has permission to obtain the first target data, invoking, by the first application of the electronic device, a system service to return the first target data to the first SDK.

2. The method according to claim 1, wherein the method further comprises:
when the first application of the electronic device determines, based on the identifier of the first SDK, that the first SDK has no permission to obtain the first target data, skipping returning, by the electronic device, any data to the first SDK.

3. The method according to claim 1, wherein the method further comprises:
when the first application of the electronic device determines, based on the identifier of the first SDK, that the first SDK has no permission to obtain the first target data, invoking, by the first application of the electronic device, the system service to return second target data to the first SDK, wherein the second target data is different from the first target data.

4. The method according to any one of claims 1 to 3, wherein the first SDK is integrated in the first application of the electronic device;
before the obtaining, by a first application of an electronic device, a first binder instruction for invoking first target data by a first software development kit SDK, the method further comprises:
integrating a binder system invocation intercept module in the first application of the electronic device; and
the obtaining, by a first application of an electronic device, a first binder instruction for invoking first target data by a first software development kit SDK comprises:
obtaining, by the first application of the electronic device by using the binder system invocation intercept module, the first binder instruction for invoking the first target data by the first SDK.

5. The method according to any one of claims 1 to 3, wherein before the obtaining, by a first application of an electronic device, a first binder instruction for invoking first target data by a first software development kit SDK, the method further comprises:
integrating a calling package name matching module in the first application of the electronic device; and
the obtaining, by the first application of the electronic device, an identifier of the first SDK comprises:
obtaining, by the first application of the electronic device, the identifier of the first SDK by using the calling package name matching module.

6. The method according to any one of claims 1 to 5, wherein the obtaining, by the first application of the electronic device, an identifier of the first SDK comprises:
determining, by the first application of the electronic device, call stack information for invoking the first binder instruction, wherein the call stack information comprises function information of a plurality of call sites;
removing, by the first application of the electronic device from the call stack information, function information of a call site associated with a system function;
determining, by the first application of the electronic device based on remaining function information of a call site in the call stack information, a first code block for invoking the first binder instruction; and
when the first code block belongs to a second code block in the first SDK, determining, by the first application of the electronic device, that the first SDK invokes the first binder instruction, and obtaining the identifier of the first SDK.

7. The method according to any one of claims 1 to 6, wherein before the obtaining, by a first application of an electronic device, a first binder instruction for invoking first target data by a first software development kit SDK, the method further comprises:
integrating a policy configuration module in the first application of the electronic device;
setting, by the first application of the electronic device, permission of the first SDK by using the policy configuration module; and
sending, by the first application of the electronic device by using the policy module, the identifier of the first SDK and permission information corresponding to the identifier of the first SDK to the calling package name matching module.

8. The method according to claim 7, wherein that the first application of the electronic device determines that the first SDK has permission to obtain the first target data comprises:
determining, by the first application of the electronic device based on the identifier of the first SDK and the permission information corresponding to the identifier of the first SDK, that the first SDK has the permission to obtain the first target data.

9. The method according to any one of claims 1 to 8, wherein the first target data comprises:
one or more of an international mobile equipment identifier IMEI number of the electronic device, an identifier of an application installed in the electronic device, and user personal data stored in the electronic device.

10. An electronic device, wherein the electronic device comprises one or more processors and one or more memories; and the one or more memories are coupled to the one or more processors, the one or more memories are configured to store computer program code, the computer program code comprises computer instructions, and the one or more processors invoke the computer instructions, so that the electronic device is enabled to perform the method according to any one of claims 1 to 9.

11. A computer-readable storage medium, comprising instructions, wherein when the instructions are run on an electronic device, the electronic device is enabled to perform the method according to any one of claims 1 to 9.

12. A computer program product comprising instructions, wherein when the computer program product runs on an electronic device, the electronic device is enabled to perform the method according to any one of claims 1 to 9.
